# EUROPÄISCHE PATENTSCHRIFT

(11) **EP 1 031 276 B1**
(45) Veröffentlichungstag und Bekanntmachung des Hinweises auf die Patenterteilung: **30.07.2003**
(21) Anmeldenummer: 00103873.6
(22) Anmeldetag: 24.02.2000
(51) Int. Cl.: A01G 9/02, A01G 31/06

(54) **Vorrichtung zur Aufzucht von Chicorée**
Device for cultivating chicory
Appareil pour la culture de chicorée

(30) Priorität: 27.02.1999 DE 29903595 U; 07.05.1999 DE 29908217 U
(43) Veröffentlichungstag der Anmeldung: 30.08.2000
(73) Patentinhaber: BRM GmbH, 26219 Bösel (DE)
(72) Erfinder: Gribbe, Peter, 26219 Bösel (DE)
(74) Vertreter: Patentanwälte Meinke, Dabringhaus und Partner

(56) Entgegenhaltungen:
- EP-A- 0 445 320
- EP-A- 0 518 210
- DE-A- 3 200 741
- DE-A- 3 925 851
- FR-A- 2 500 720
- FR-A- 2 761 574
- FR-A- 2 761 857
- US-A- 4 581 848

## Beschreibung

Die Erfindung richtet sich auf eine Vorrichtung zur Aufzucht von lebenden Pflanzen, insbesondere von Chicorée, als stapelbare, mit Flüssigkeit flutbare Kiste der im Oberbegriff des Anspruches 1 angegebenen Gattung.

Eine derartige Vorrichtung ist beispielsweise aus der EP-0 445 320-A1 oder der FR-2 390 088-A1 bekannt. Einen Aufzuchtbehälter mit Überflutwehren für die Nährflüssigkeit zeigt auch die DE-196 16 146-A1.

Dabei ist es z.B. bekannt, die Blattknospen der Zichorien-Pflanze, nämlich den Chicorée, in gefluteten Becken aufzuziehen, wobei dies, um ein Verfärben der Blätter zu vermeiden, im Dunkeln geschieht. Um die Handhabung und das Zuchtziel zu erleichtern ist es bekannt, daß die Stapelbeine den Kistenboden nach unten und den Kistenrand nach oben überragen, so daß gewährleistet ist, daß die jeweils darüberliegende Kiste den notwendigen Abstand ihres Bodens zur Flüssigkeitsoberfläche der darunterliegenden Kunststoffkiste aufweist.

Aufgabe der Erfindung ist die Schaffung einer flutbaren, wirtschaftlich herstellbaren Kiste, mit der eine derartige Aufzucht problemlos möglich ist.

Mit einer derartigen Vorrichtung wird diese Aufgabe dadurch gelöst, daß die Vorrichtung aus einem recycelten Kunststoffmaterial gebildet ist, und daß die Stapelbeine im Boden eine Zentriermulde und im Kopf einen Zentrierzapfen zum Eingriff in die Zentriermulde einer darüber angeordneten Kiste aufweisen, wobei wenigstens parallel zu den Längswänden der Kisten kammartig ausgebildete Überlaufwehre vorgesehen sind und im Kanal zwischen Wand und Überlaufwehr ein Ablauf angeordnet ist. Eine derartige Kunststoffkiste hat die solchen Behältnissen innewohnenden Vorteile, sie ist preiswert herzustellen, vergleichsweise leicht zu handhaben, leicht zu reinigen und erfindungsgemäß stapelbar, d.h. es können eine Reihe von derartigen Aufzuchtkisten oder Aufzuchtbecken- übereinandergestapelt werden.

Es gibt Fälle, in denen die erfindungsgemäßen Stapelkisten so dicht nebeneinander angeordnet sind, daß es zu einem Verwachsen der am Rand der jeweiligen Kisten befindlichen Pflanzen kommen kann, so daß beim Trennen der Kisten Pflanzenteile abgerissen werden. Um dem vorzubeugen, sieht die Erfindung vor, daß wenigstens parallel zu den Längswänden der Kisten Überlaufwehre vorgesehen sind, wobei im Kanal zwischen Wand und Überlaufwehr der Ablauf angeordnet ist. Durch diese Überlaufwehre wird erreicht, daß die Pflanzen nicht bis in den unmittelbaren Randbereich der Längsseiten einwachsen können, im übrigen sorgen diese Überlaufwehre dafür, daß jeweils ein völlig ungestörter Ablauf der Nährflüssigkeit bzw. des Wassers möglich gemacht wird.

Zweckmäßig sind dabei die Überlaufwehre kammartig ausgebildet. An dieser Stelle sei bemerkt, daß die Überwehre nicht nur an den Längsseiten, wenn auch dort bevorzugt, sondern auch an den kürzeren Querseiten einer Kiste angeordnet sein können.

Weitere Ausgestaltungen der Erfindung ergeben sich aus den Unteransprüchen.

Da derartige Kunststoffkisten in entsprechenden Formen von Spritzmaschinen hergestellt werden, muß ihre Konstruktion so getroffen sein, daß ein Entformen problemlos möglich ist. Dem trägt u.a. die Erfindung dadurch Rechnung, daß der Zentrierzapfen an einer Kappe angeformt ist, die in das in der Produktionslage oben offene Stapelbein einrastbar ist. Damit muß nur eine Vielzahl von Kappen zusätzlich produziert werden, um die jeweiligen Beine der Kisten oben zu verschließen und dabei gleichzeitig ein Zentrierhilfsmittel zur Verfügung zu stellen.

Nach der Erfindung kann auch vorgesehen sein, daß der Überlauf im Kistenboden in einem Gewindestutzen als in der Höhe verschiebbares, mit einem Überwurfklemmring fixierbares Rohr ausgebildet ist. Damit ist es möglich, eine Reihe von Kisten mit Wasser und Nährflüssigkeit in einer Art Kaskade übereinanderzustellen, die überlaufende Flüssigkeit verläßt die erste Kiste über das Überlaufrohr, bewässert die zweite Kiste, die bei ihrem Überlauf über deren Rohr wieder die darunterliegende Kiste flutet, wobei das Rohr der unteren Kiste an einem Schlauch mit Pumpe angeschlossen werden kann, so daß die Flüssigkeit wieder in die obere Kiste einbringbar ist und alle Flüssigkeiten und Nährmittel im Kreislauf geführt werden können.

Um eine Art kaskadenförmiges Befluten übereinander gestapelter Kisten zu ermöglichen, ist nach der Erfindung auch vorgesehen, daß in einem Kanal zwischen Überlaufwehr und Wand der Kistenabfluß und im gegenüberliegenden Überlaufwehr/Wandbereich der Kistenzufluß angeordnet ist. Die Nährflüssigkeit kann dann durch die Schlitze in den kaminartigen Parallelwänden zu den Außenwänden in die Kiste einlaufen, diese ganz in Querrichtung durchströmen und über das Überlaufwehr an der gegenüberliegenden Seite dann über den Kistenabfluß ablaufen, um ggf. direkt in den Kistenzufluß der darunter liegenden Kiste zu münden.

Um eine gewisse Vergrößerung des Ein- bzw. Abströmbereiches im Bereich des Kistenzuflusses bzw. Kistenabflusses zu erreichen, ist in weiterer Ausgestaltung vorgesehen, daß das Überlaufwehr eine nach innen weisende Ausbuchtung aufweist, jeweils dem Kistenabfluß bzw. dem Kistenzufluß zugeordnet.

Die Erfindung ist nachstehend anhand der Zeichnung beispielsweise näher erläutert. Diese zeigt in
- Fig. 1: einen Eck-Ausschnitt zweier übereinandergestapelter Kisten in Seitenansicht,
- Fig. 2: die Ansicht auf den Boden einer Kiste mit Ecke und Überlaufrohr,
- Fig. 3: die Ansicht einer Kistenecke von oben,
- Fig. 4 bis 9: Einzelheiten von Möglichkeiten der Verschlußkappen-Ausbildung der nach oben offenen Stapelbeine,
- Fig. 10: eine Möglichkeit der Fixierung des Überlaufrohres im Kistenboden,
- Fig. 11: eine Aufsicht auf ein abgewandeltes Ausführungsbeispiel der Erfindung,
- Fig. 12: eine Bodenansicht dieser Gestaltung,
- Fig. 13: linke Figurenhälfte eine Aufsicht auf die Außenlängswand sowie
rechte Figurenhälfte eine Aufsicht von der Innenseite auf ein Überlaufwehr,
- Fig. 14: einen Schnitt etwa gemäß XIV in Fig. 11 sowie in
- Fig. 15: eine Seitenansicht der kürzeren Kistenseite.

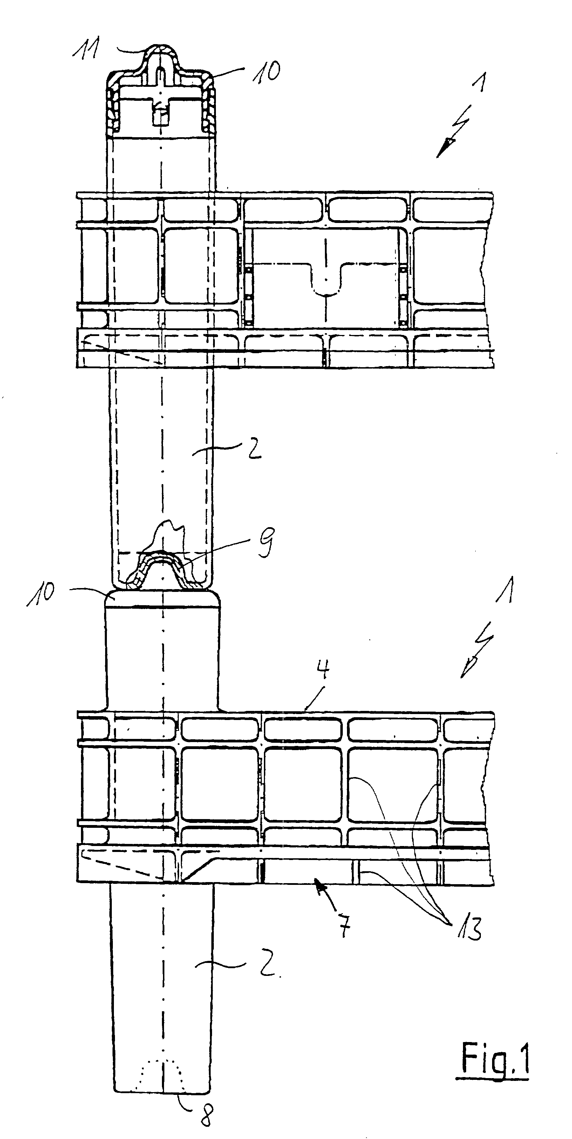

Die allgemein mit 1 bezeichnete kistenartige Vorrichtung zur Aufzucht von Chicorée ist in Fig. 1 in Form lediglich einer Ecke dargestellt, wobei zwei derartige Kisten 1 übereinander gestapelt sind.

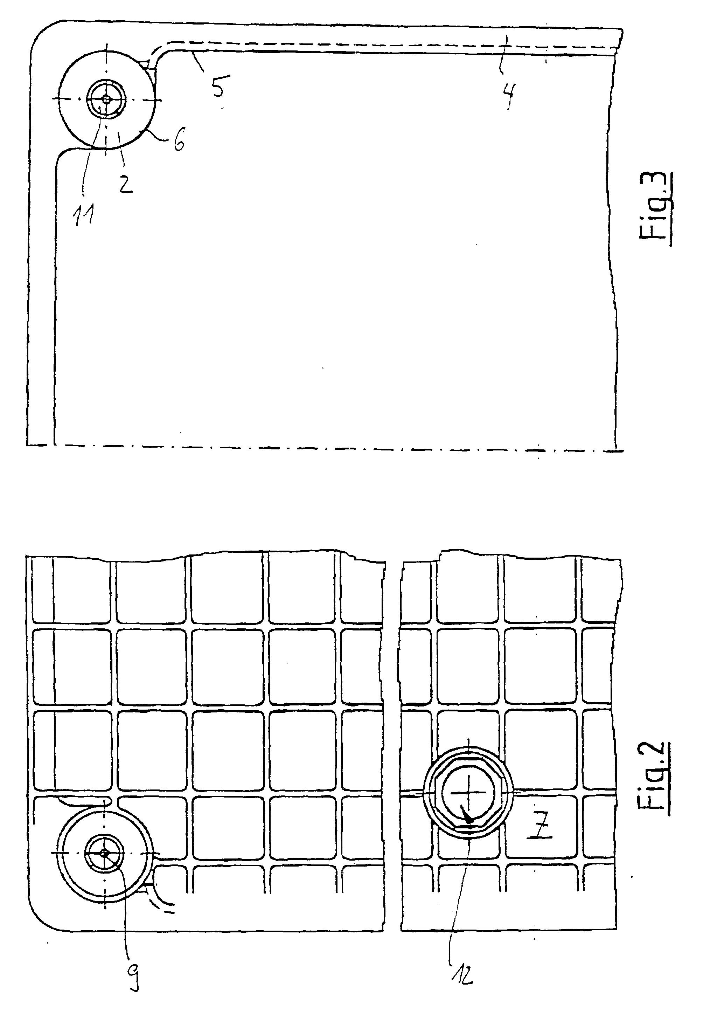

Die z.B. aus recyceltem Kunststoffmaterial bestehenden Kisten, es kann sich natürlich auch um Kisten aus nicht recyceltem Kunststoff handeln, weisen in ihren vier Ecken, die in Unteransicht in Fig. 2 und in Aufsicht in Fig. 3 dargestellt sind, je ein Stand- und Stapelbein 2 auf, das als Kunststoffhohlkörper ausgebildet ist, wobei die Kistenränder 4 und die entsprechenden Innenwände 5 in den Ecken in die Außenkontur 6 jedes Stapelbeines 2 übergehen, wie sich dies in Aufsicht aus Fig. 3 ergibt. Die Stapelbeine 2 überragen den Kistenkörper 1 sowohl nach oben, d.h. über den Rand 4, wie auch nach unten, d.h. sie stehen über den Boden, allgemein mit 7 bezeichnet, über.

Um die Stapelfähigkeit zu gewährleisten, ist der mit 8 bezeichnete Standboden jedes Stapelbeines 2 zentrisch nach innen eingewölbt. Diese Einwölbung ist mit 9 bezeichnet, während oben auf dem als Hohlkörper ausgebildeten Standbein 2 eine allgemein mit 10 bezeichnete Kappe aufgesteckt ist, die ihrerseits eine zentrische, nach oben weisende Auswölbung 11 aufweist, die der Größe nach in die Einbuchtung 9 formschlüssig eingreift.

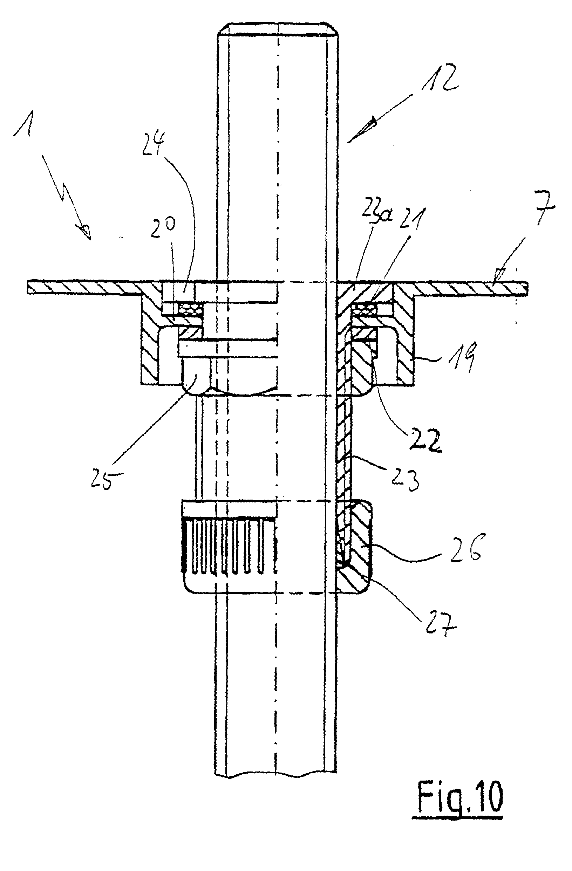

Außer den vier Stapelbeinen ist jede Kiste 1 auch noch mit einem Flüssigkeitsüberlauf 12 im Kistenboden 7 ausgerüstet, wie sich dies aus Fig. 2 ergibt, Einzelheiten des Überlaufes sind als Detail in Fig. 10 dargestellt.

Wie sich insbesondere aus den Fig. 1 und 2 ebenfalls ergibt, sind sowohl die Außenbereiche der Seitenwände als auch der Unterbereich des Bodens 7 mit Verstärkungsrippen ausgerüstet, allgemein mit 13 bezeichnet, wobei neben der hier dargestellten Rippenform auch andere Formen und Ausfachungen vorgesehen sein können.

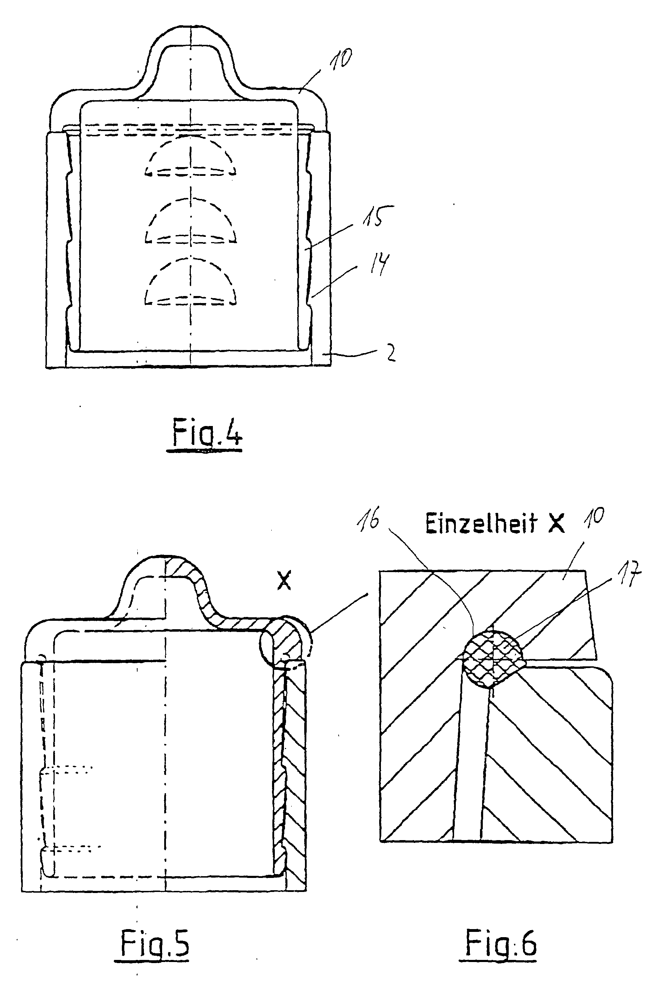

Einige mögliche Gestaltungen der Kappen 10, die oben in die Stapelbeine eingesteckt sind, zeigen die Fig. 4 bis 9.

Fig. 4 zeigt die Möglichkeit, am Außenumfang z.B. vierfach in der Innenwand des Stapelbeines 2 nach unten gerichtete Rasten 14 vorzusehen, wobei am Außenumfang der Kappe 10 entgegengesetzte Rastnocken 15 angeordnet sind. Die Rasten 14 und die Nocken 15 können auch als umlaufende, entsprechend geneigte Rampen bzw. Wülste ausgebildet sein, eine solche Gestaltung zeigt beispielsweise die Fig. 5, wobei in den Fig. 4 bis 9 alle gleich wirkenden Elemente das gleiche Bezugszeichen tragen, auch bei anderer körperlicher Ausgestaltung.

Die Einzelheit X der Fig. 5, die in Fig. 6 vergrößert dargestellt ist, zeigt noch, daß in der oberen Innenecke, allgemein mit 16 bezeichnet, der Kappe 10 eine umlaufende Ringdichtung 17 vorgesehen sein kann, um bei Gebrauch der Kisten das Einlaufen von Flüssigkeit in das Innere dieses Standbeines 2 zu verhindern.

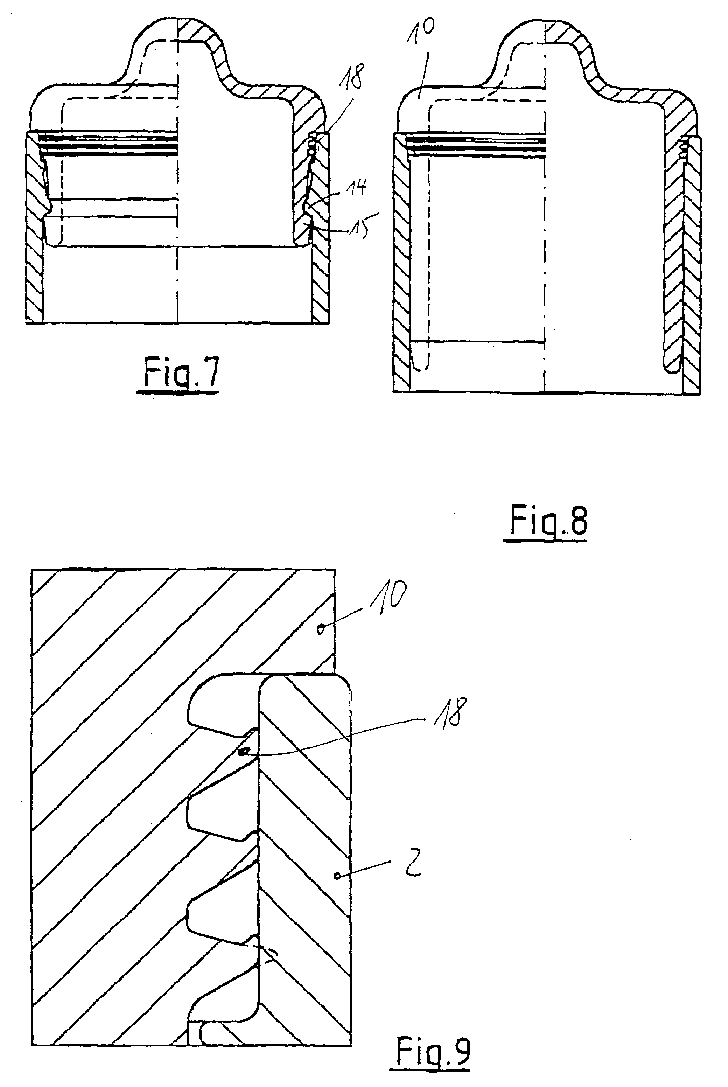

Klemmungen, Rastungen und Dichtungen zeigen auch die Fig. 7 bis 9, wobei in Fig. 9 eine umlaufende Mehrfachlamellendichtung 18 dargestellt ist, in Fig. 7 mit einem Rastenpaar 14/15, während in Fig. 8 ein reiner Klemmsitz mit Über- bzw. Untermaß der jeweils korrespondierenden Flächen dargestellt ist.

Fig. 10 zeigt Einzelheiten des oben schon angesprochenen Flüssigkeitsüberlaufes 12. Im Boden 7 der Kiste 1 ist ein nach außen ragender Ringflansch 19 vorgesehen, der eine wiederum nach innen weisende Ringschulter 20 aufweist, die oben und unten von Dichtungsringen 21 und 22 beaufschlagbar ist. Das Überlaufrohr 12 ist im wesentlichen als Gewinderohr gestaltet und in eine Gewindehülse 23 geschraubt, die mit einer Schulter 23a das durch den nach außen weisenden Flansch 19 gebildete Auslaufloch 24 verschließt, wie sich dies aus Fig. 10, rechte Figurenhälfte, ergibt. Über die Gewindehülse 23 ist ein Gewinde- und Fixierring 25 geschraubt, der sich seinerseits an die unten liegende Dichtung 22 anlegt und bei Verspannung die Dichtungen 21 und 22 unter Zwischenlage der Ringschulter 20 gegeneinander verspannt.

Zur Fixierung des Überlaufrohres 12 ist auf dem nach unten weisenden Ende des Fixierrohres 23 eine weitere Überwurfmutter 26 befestigt, die in ihrem Inneren einen Keilring 27 gegen eine innere freie Keilfläche des Fixierrohres 23 verpreßt, wie sich dies aus Fig. 10, rechte Figurenhälfte, ergibt.

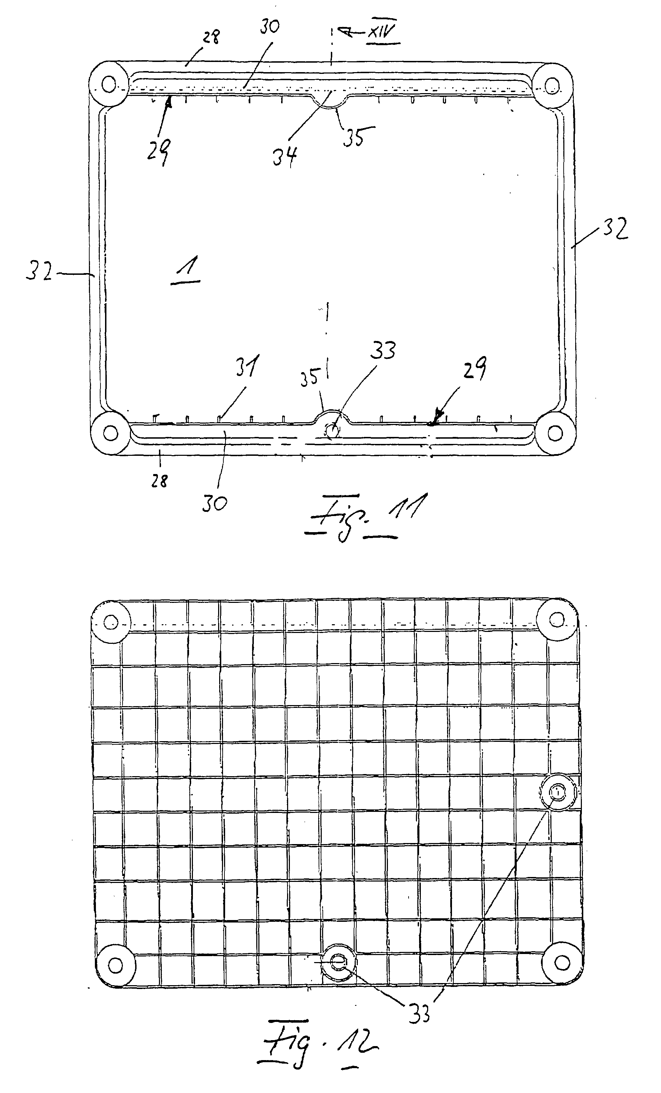

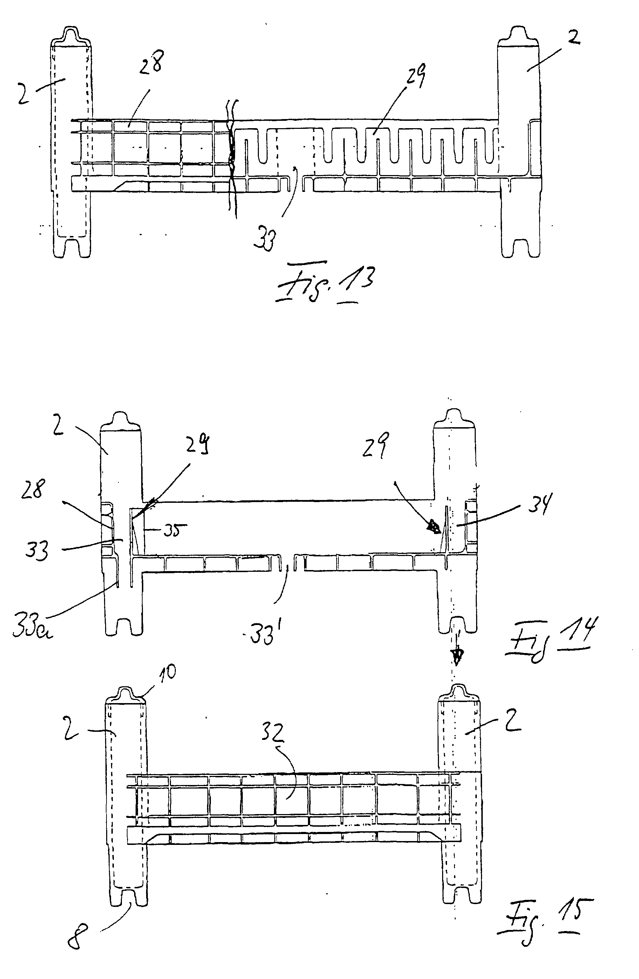

In den Fig. 11 bis 15 ist ein abgewandeltes Ausführungsbeispiel der erfindungsgemäßen Vorrichtung dargestellt.

Wie die Aufsicht auf Fig. 11 zeigt, ist den mit 28 bezeichneten Längswänden nach innen je ein kammartiges Überlaufwehr 29 zugeordnet, so daß zwei parallele Kanäle 30 auf beiden Seiten der Kiste 1 entstehen. Nach innen weisen die kammartigen Überlaufwehre kleine Verstärkungsrippen 31 auf.

Ohne daß dies hier dargestellt ist, können auch den kürzeren Seitenwänden 32 derartige Überlaufwehre zugeordnet sein. In den Kanälen 30 ist zum einen der hier mit 33 bezeichnete Abfluß vorgesehen (in Fig. 12 ist sowohl ein Abfluß 33 an der kurzen als auch an der längeren Kistenseite dargestellt) und auch der mit 34 bezeichnete Zufluß, wobei hier das Überlaufwehr eine nach innen weisende Ausbuchtung 35 aufweist, um die jeweilige Fläche zu vergrößern.

Werden nämlich die Kisten jeweils um 180° versetzt zueinander angeordnet, kann die Nährflüssigkeit von oben kommend über einen Ablauf 33 in den Zulauf 34 der darunter liegenden Kiste einströmen, wird mittels des Überlaufwehres 29 verteilt, überströmt das gegenüberliegende Wehr 29 und verläßt die Kiste über den Abfluß 33, um dann ggf. wieder in einem Zulauf 34 einer darunter liegenden, um 180° versetzten Kiste einzulaufen.

Um das Zu- und Abströmen möglichst verlustfrei zu gestalten, kann, wie dies in Fig. 14 lediglich vereinfacht angedeutet ist, der Abfluß 33 einen nach unten verlängerten Ansatz 33a aufweisen, was in den sonstigen Figuren nicht näher dargestellt ist. Hier kann auch ein zentrischer, wie in den vorstehend beschriebenen Beispielen vorgesehener Abfluß 33' vorgesehen sein, ohne daß es hierauf näher ankommt.

Natürlich ist das beschriebene Ausführungsbeispiel der Erfindung noch in vielfacher Hinsicht abzuändern, ohne über den Gegenstand wie beanspruncht zu gehen. So können, wenn dies Festigkeitserwägungen notwendig machen, bei entsprechender Größe der Vorrichtung 1 bzw. entsprechender Kistengröße auch mehr als vier Stapelbeine vorgesehen sein u. dgl. mehr.

## Patentansprüche

1. Vorrichtung (1) zur Aufzucht von lebenden Pflanzen, insbesondere Chicorée, als stapelbare, mit Flüssigkeit flutbare Kiste mit wenigstens vier im Bereich der Kistenecken angeordneten, das Übereinanderstapeln ermöglichenden Stapelbeinen (2), die den Kistenboden (7) nach unten und den Kistenrand (4) nach oben überragen, sowie mit einem Flüssigkeitsüberlauf,
**dadurch gekennzeichnet,**
**daß** die Vorrichtung (1) aus einem recycelten Kunststoffmaterial gebildet ist, und daß die Stapelbeine (2) im Boden (8) eine Zentriermulde (9) und im Kopf (10) einen Zentrierzapfen (11) zum Eingriff in die Zentriermulde einer darüber angeordneten Kiste aufweisen, wobei wenigstens parallel zu den Längswänden (28) der Kisten (1) kammartig ausgebildete Überlaufwehre (29) vorgesehen sind und im Kanal (30) zwischen Wand (28) und Überlaufwehr (29) ein Ablauf (33) angeordnet ist.

2. Vorrichtung nach Anspruch 1,
**dadurch gekennzeichnet,**
**daß** der Zentrierzapfen (11) an einer Kappe (10) angeformt ist, die in das in der Produktionslage oben offene Stapelbein (2) einrastbar ist.

3. Vorrichtung nach Anspruch 1 oder 2,
**dadurch gekennzeichnet,**
**daß** der Überlauf im Kistenboden (7) in einem Gewindestutzen (23) als in der Höhe verschiebbares, mit einem Überwurfklemmring (26) fixierbares Rohr (12) ausgebildet ist.

4. Vorrichtung nach einem der vorangehenden Ansprüche,
**dadurch gekennzeichnet,**
**daß** die Kistenseitenwände und der Kistenboden auf ihrer nach außen weisenden Fläche mit an sich bekannten Verstärkungsrippen (13) ausgerüstet sind.

5. Vorrichtung nach Anspruch 1 oder einem der folgenden,
**dadurch gekennzeichnet,**
**daß** in einem Kanal (30) zwischen Überlaufwehr (29) und Wand (28) der Kistenabfluß (33) und im gegenüberliegenden Überlaufwehr/Wandbereich der Kistenzufluß (34) angeordnet ist.

6. Vorrichtung nach Anspruch 5,
**dadurch gekennzeichnet,**
**daß** im Bereich des Kistenabflusses (33) und des Kistenzuflusses (34) das Überlaufwehr (29) eine nach innen weisende Ausbuchtung (35) aufweist.

## Claims

1. Device (1) for rearing live plants, in particular chicory, as a stackable box through which liquid may flow with at least four stacking legs (2) in the vicinity of the corners of the box allowing stacking one on top of another and which protrude downwards from the base (7) of the box and upwards from the edge of the box, and with a liquid overflow,
**characterised in that**,
the device (1) is made from a recycled plastic material, and **in that** the stacking legs (2) in the base (8) have a locating recess (9) and in the head (10) a locating stud (11) for engaging in the locating recess a box arranged on top of it, wherein at least parallel to the longitudinal walls (28) of the box (1) comb-like overflow weirs (29) are provided and an outlet (33) is located in the channel (30) between the wall (28) and the overflow weir (29).

2. Device according to claim 1,
**characterised in that**
the locating stud (11) is moulded onto a lid (10), that can be engaged in the stacking leg (2) that is open at the top in the production position.

3. Device according to claim 1 or 2,
**characterised in that**
the overflow in the base (7) of the box is designed in a screw support (23) as a height adjustable tube (12) that can be fixed in position by a slip-on locking ring (26).

4. Device according to any of the above claims,
**characterised in that**
the side wall and the base of the box are fitted on their outward-facing surface with reinforcing ribs (13) known from prior art.

5. Device according to claim 1 or one the following,
**characterised in that**
the box inlet (34) is arranged in a channel (30) between the overflow weir (29) and the wall (28) of the box overflow (33) and in the opposing overflow weir/wall area.

6. Device according to claim 5,
**characterised in that**
in the area of the box overflow (33) and the box inlet (34) the overflow weir (29) has an inwardly directed indentation (35)

## Revendications

1. Dispositif (1) pour la culture de plantes vivantes, en particulier de chicorée, constitué d'une caisse empilable pouvant être remplie de liquide, avec au moins quatre pieds d'empilage (2) disposés dans le secteur des coins de caisses, qui permettent l'empilage des caisses les unes sur les autres, et qui font saillie sur le fond de la caisse (7) vers le bas et au-dessus du bord de la caisse (4) vers le haut, ainsi qu'avec une rigole d'écoulement des liquides,
**caractérisé en ce que**,
le dispositif (1) est constitué d'un matériau en matière plastique recyclé, et **en ce que** les pieds d'empilage (2) présentent dans le fond (8) une cavité de centrage (9) et au sommet (10) un pivot de centrage (11) qui se met en prise dans la cavité de centrage d'une caisse disposée au-dessus, tandis que des déversoirs de trop-plein (29) façonnés en forme de peignes sont prévus au moins parallèlement aux parois longitudinales (28) des caisses (1) et qu'un orifice de sortie (33) est disposé dans le canal (30) entre la paroi (28) et le déversoir de trop-plein 29.

2. Dispositif selon la revendication 1,
**caractérisé en ce que**,
le pivot de centrage (11) est moulé sur un capuchon (10), qui est encliquetable dans le pied d'empilage (2), ouvert en haut dans les conditions de production.

3. Dispositif selon la revendication 1 ou 2,
**caractérisé en ce que**,
le déversoir de trop-plein est façonné dans le fond de la caisse (7), dans une tubulure filetée (23) sous la forme d'un conduit (12) fixable au moyen d'une bague de serrage d'accouplement (26) et ajustable en hauteur,

4. Dispositif selon l'une des revendications précédentes,
**caractérisé en ce que**,
les parois latérales de la caisse et le fond de la caisse sont, sur leur surface dirigée vers l'extérieur, équipés de nervures de renforcement (13) connues en soi.

5. Dispositif selon la revendication 1 ou l'une des suivantes, caractétisé en ce que, dans un canal (30) entre le déversoir de trop-plein (29) et la paroi (28), est disposé l'écoulement de la caisse (33) et, dans le secteur déversoir de trop-plein/paroi opposé, l'alimentation de la caisse (34).

6. Dispositif selon la revendication 5,
**caractérisé en ce que**,
dans le secteur de l'écoulement de la caisse (33) et de l'alimentation de la caisse (34), le déversoir de trop-plein (29) présente une courbure (35) dirigée vers l'intérieur.
